# NEUE EUROPÄISCHE PATENTSCHRIFT

(11) **EP 0 255 071 B2**
(45) Veröffentlichungstag und Bekanntmachung des Hinweises auf die Entscheidung über den Einspruch: **07.09.1994**
(45) Hinweis auf die Patenterteilung: 07.11.1990
(21) Anmeldenummer: 87110806.4
(22) Anmeldetag: 25.07.1987
(51) Int. Cl.: B62D 55/21

(54) **Gleiskette nach dem Verbinderprinzip für Fahrzeuge**
Bi-tubular type endless track for vehicles
Chenille du type bitubulaire pour véhicules

(30) Priorität: 28.07.1986 DE 3625491
(43) Veröffentlichungstag der Anmeldung: 03.02.1988
(73) Patentinhaber: DIEHL GMBH & CO., 90478 Nürnberg (DE)
(72) Erfinder: Erlenmaier, Günter, D-3502 Vellmar 3 (DE); Spies, Klaus, D-5630 Remscheid (DE)

(56) Entgegenhaltungen:
- DE-A- 1 480 750
- DE-A- 1 480 778
- DE-A- 1 605 523
- FR-A- 1 363 977
- US-A- 2 392 383
- J. V. Freymann/O. Körner, "Gleisketten gepanzerter Fahrzeuge", 1984, Schabak, Koblenz, Bad Breisig, Seiten 70-73 und 84-89

## Beschreibung

Die Erfindung bezieht sich auf eine Verbindergleiskette für Fahrzeuge nach dem Oberbegriff des Anspruches 1.

Bei Gleisketten, bei denen Verbinder außerhalb des Rohrkörpers liegen, ist eine Gewichtseinsparung dadurch versucht worden, daß ab einer bestimmten Biegebeanspruchung der Bolzen die miteinander verbundenen Kettenelemente, nämlich Kettenkörper und Verbinder, sich gegenseitig seitlich stützen und dadurch den Bolzen vor weiterer Biegung schützen, siehe hierzu die DE-A1-2 614 691. Damit sei es möglich, die Durchmesser der Bolzen kleiner und damit auch das Kettenglied leichter auszuführen. In der Praxis hat es sich jedoch gezeigt, daß die Einhaltung der vorgegebenen Abstandstoleranzen nicht möglich ist, so daß ein vorzeitiger Bruch der Bolzen eintrat.

Aus der DE-A-1 605 523 ist eine Verbindergleiskette für Fahrzeuge bekannt, bei der in Kettenkörpern gummigelagerte Bolzen und außen auf den Bolzen angeordnete, separate, über eine Schraube spannbare Verbinder zur Verbindung der Kettenkörper vorgesehen sind. Die Kettenkörper sind als Rohrkörper ausgebildet. Zur Gewichtsminderung sind Verbindungsstege zwischen den Rohren kürzer ausgebildet als die Länge der Rohre. Damit liegen an den Außenseiten des Rohrkörpers zwischen den Rohren Ausnehmungen vor. Diese Ausnehmungen haben für den Eingriff von Triebzahnrädern an der Kette keine Funktion. Der Eingriff der Triebzahnräder an der Kette erfolgt über Verbinder.

Diese sind außerhalb des Rohrkörpers an den freien Enden von Bolzen befestigt.

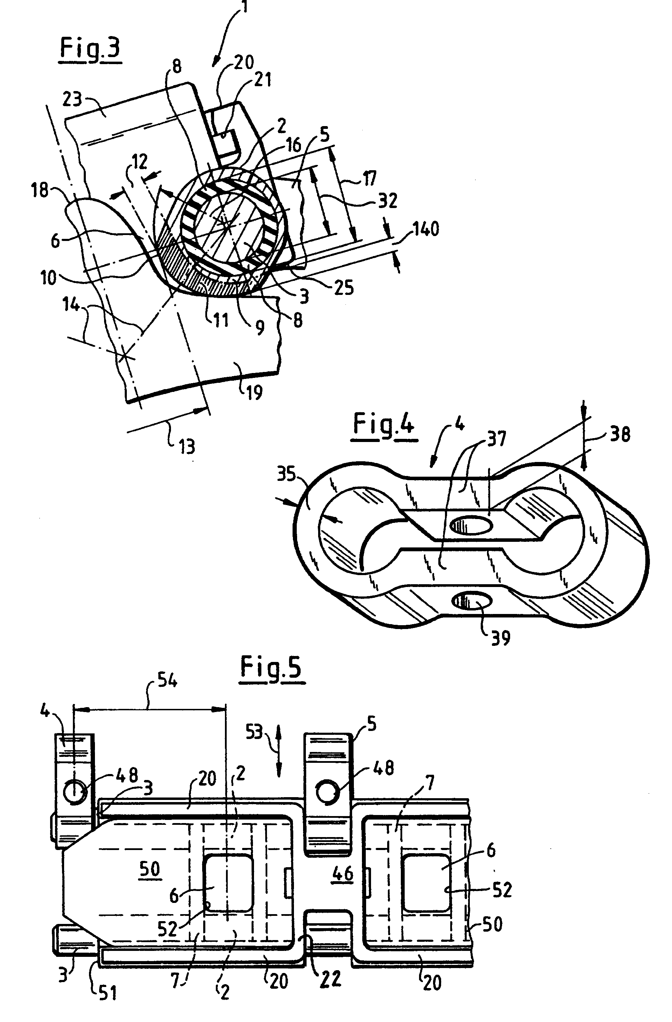

Aus der FR-A-1 363 977 ist eine weitere Gleiskette bekannt, bei der zwischen einem Steg und einem Flansch ein freier Raum vorgesehen ist, welcher quer dazu von Rohrteilen begrenzt ist. Der freie Raum erlaubt bei einem demontierten Laufpolster den Austritt des aus dem Boden ausgepreßten Wassers und Schmutzes. Ein Hinweis auf den Eingriff eines Triebzahnes in den freien Raum geht nicht hervor. Aus dem Fachbuch J. v. Freymann / O. Körner "Gleisketten gepanzerter Fahrzenge', 1984, Schabak, Seiten 71 und 73, Abbildung 3-3 ist bereits eine Verbindergleiskette gemäß dem Oberbegriff des Anspruches 1 bekannt.

Der Erfindung liegt die Aufgabe zugrunde, unter Beibehaltung der Betriebssicherheit an sich bekannter Gleisketten nach dem Verbinderprinzip, das Kettengewicht zu reduzieren.

Die Erfindung löst diese Aufgabe entsprechend den kennzeichnenden Merkmalen des Anspruches 1. Vorteilhafte Weiterbildungen der Erfindung sind den Unteransprüchen zu entnehmen.

Der Zahneingriff des Triebzahnrades erfolgt nicht, wie bisher üblich, an den außenliegenden Verbindern der Gleiskette, sondern im Kettenkörper zwischen den Rohren und seitlich zwischen zwei Stegen zur seitlichen Führung des Triebzahnrades.

Die Verschleißflächen des Rohrkörpers, die mit dem Triebzahnrad in Kontakt kommen, sind zur Erzielung eines hohen Verschleißwiderstandes mit einer Randschichthärtung versehen. Deren Härtetiefe erstreckt sich von der Zahnflankenfläche für den Triebzahn bis etwa zur Bohrung für den Bolzen. Der Rohrkörper ist daher solange einsatzfähig, bis die gesamte Härteschicht abgetragen und nur noch eine geringe, nicht gehärtete Zone der Restwanddicke vorhanden ist ohne die Gefahr, daß der Rohrkörper reißt und damit unbrauchbar wird. Der Rohrwandbereich, der nach diesem Prinzip als Verschleißvolumen bereitgestellt wird, hat nur in sehr geringem Maße Kettenzugkräfte zu übertragen und darf daher auf ein geringes Mindestmaß verschlissen werden. Bei einem bekannten, außenliegenden Verbinder nach der DE-B-17 55 630, der, wie bisher üblich, durch Zahneingriff verschleißt, muß jedoch eine relativ große Restwanddicke vorhanden bleiben, da der Verbinder schließlich die vollen Kettenzugkräfte übertragen muß. Durch die erfindungsgemäße Bereitstellung dieses großen Verschleißvolumens entspricht die Gebrauchsdauer des Rohrkörpers damit etwa der 1,5- bis 2-fachen eines herkömmlichen Verbinders mit einer entsprechenden Härtezone.

Der Bolzendurchmesser ist gegenüber bisher bekannten Ausführungen wesentlich kleiner. Dies hat die Sekundärwirkung, daß der Kettenkörper entsprechend niedriger und damit leichter ist bei gleicher Dicke der Gummilagerung für den Bolzen.

Bei einer vorgegebenen Kettenbreite - gemessen zwischen den Außenflächen der Verbinder - ist nach Erfindung die elastische Lagerungslänge der Bolzen im Rohrkörper wesentlich gröber, und zwar etwa zwischen 3 und 5%, da die außenliegenden Verbinder im Vergleich zu bisherigen Ausführungen wesentlich schmaler ausgeführt sind. Nach der Erfindung liegt eine 5 bis 7% größere Lagerlänge für die Bolzen vor.

Da der Triebkranz nicht an den außenliegenden Verbindern angreift, sind diese vorteilhaft mit geringen Wanddicken schellenartig ausgebildet. Die Wanddicken im Umschlingungsbereich sind so ausgelegt, daß die zu übertragenden Kräfte im Betrieb der Kette zuverlässig übertragen werden.

Der Zahneingriff im Rohrkörper befreit den Bolzen weitgehend von stoßartig aufgebrachten Biegekräften und schont damit die hochempfindliche Lagerung des Bolzens. Mit den geringen Wanddicken hat der Verbinder die Funktion einer Bandschelle, die den Bolzen mit gleichförmiger Tangentialkraft ohne nennenswerte Biegung umschließt. Zur Befestigung reicht eine geringe Spannkraft und damit eine kleinere und leichtere Schraube aus. Deshalb sind die Montagekräfte kleiner und daher der Verbinder schneller und leichter zu montieren als nach dem Stand der Technik.

Bei vorgegebenen Platzverhältnissen am Fahrzeug mit relativ eng benachbarten Triebzahnrädern liegen die Öffnungen für die Triebzähne nahe des Mittelteils des Rohrkörpers. Dementsprechend sind für die Schmutzabfuhr in den Laufpolstern durchgehende Ausnehmungen vorgesehen. Ein sogenanntes "Aufsteigen" der Verbindergleiskette auf die Triebzahnräder, verbunden mit dem Abwerfen der Verbindergleiskette, ist damit sicher verhindert. Wesentlich für die Erfindung ist der Rohrkörper mit seinen beiden Öffnungen für den Eingriff der Triebzahnräder zwischen den Rohrabschnitten. Diese Maßnahme bewirkt eine Gewichtseinsparung in Höhe von 8 bis 10% am Rohrkörper trotz der ca. 3-5% größeren Breite der Rohrkörper. Der breitere Rohrkörper vergrößert wesentlich die Bodenaufstandsfläche der Kette am Boden, so daß der Bodendruck entsprechend klein wird. Damit steigt die Beweglichkeit eines Fahrzeuges im Gelände bei gleicher Fahrzeug-Antriebsleistung, entsprechendes gilt für die Fahrt auf der Straße. Diese Maßnahme hat weiter zur Folge, daß durch die Krafteinleitung unmittelbar in den Rohrkörper die Bolzen günstiger belastet und die Verbinder vollkommen vom Triebzahneingriff entlastet werden. Die gesamten Maßnahmen führen gegenüber einer Serienkette für schwere Panzerfahrzeuge zu einer Gewichtseinsparung von ca. 14% enstprechend einer Gewichtseinsparung bei einem Fahrzeug von ca. 750 kg.

Ausführungsbeispiele der Erfindung sind in der Zeichnung dargestellt

Es zeigen:

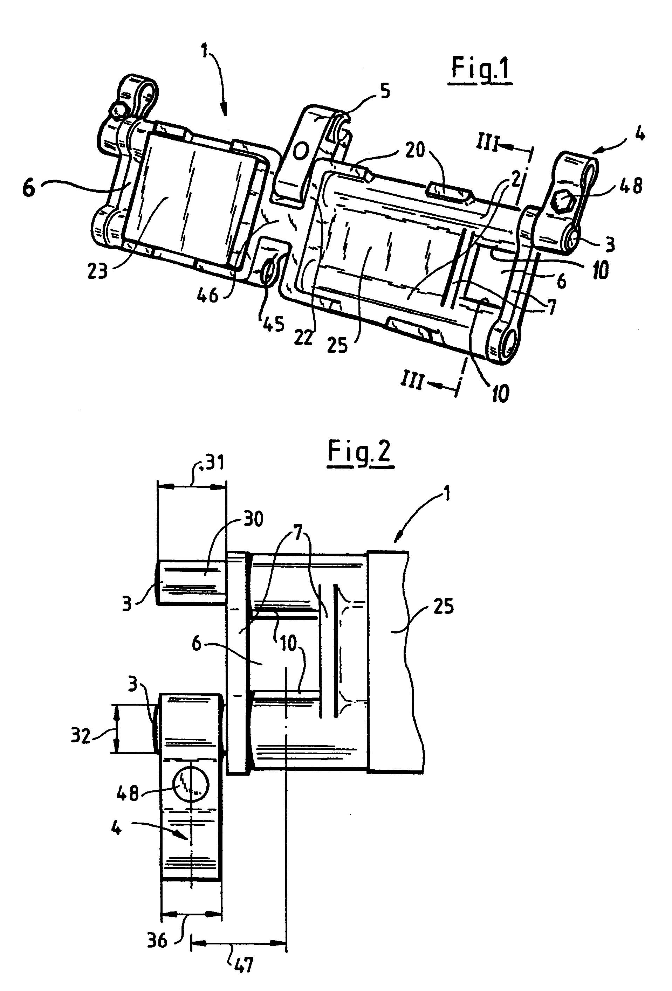

Fig. 1 einen Rohrkörper von der Fahrbahnseite gesehen;
Fig. 2 den Rohrkörper nach Fig. 1 von der Laufrollenseite gesehen;
Fig. 3 einen Eingriff eines Triebzahnrades am Rohrkörper nach Fig. 1, entsprechend der Schnittlinie mit eingesetztem Laufpolster:
Fig. 4 einen Verbinder nach Fig. 1;
Fig. 5 einen weiteren Rohrkörper.

Ein Rohrkörper 1 einer nicht weiter dargestellten Gleiskette nach dem Verbinderprinzip ist mit in Rohren 2 gelagerten, durchgehenden Bolzen 3 und daran außen befestigten Verbindern 4 und einem Mittenverbinder 5 versehen.

Die Gummilager sind mit 8 bezeichnet.

Öffnungen 6 für den Zahn 18 eines Triebzahnrades 19 werden durch die Rohre 2 und durch Stege 7 begrenzt. An den Rohren 2 sind einstückige, gehärtete Verschleißnocken 10 mit nierenförmigen Randschicht-Härtezonen 11 vorgesehen. Die breiteren Abschnitte 12 liegen am engsten Querschnitt 13 der Öffnung 6. Die Hauptachsen 14 der Härtezonen 11 bilden eine V-Form. Der mittlere Radius 16 für die Außenkontur der Härtezone 11 entspricht etwa dem Innendurchmesser 17 der Rohre 2. Ein Zahn 18 eines Treibkranzes 19 greift nach Fig. 3 in den Triebzahneingriff 6 ein.

Am Rohrkörper 1 sind Greiferfeisten 20 mit Führungsnuten 21 und Anschlagleisten 22 für ein einschiebbares Laufpolster 23 sowie ein H-förmiges Mittelteil 46 und Bodenplatten 25 vorgesehen. Der Mitteilteil 46 weist Ausnehmungen 45 zum Einsetzen der Mittenverbinder 5 auf.

Die freien Bolzenabschnitte 30 haben eine Länge 31, die dem ca. 1,4-fachen Durchmesser 32 des Bolzens 3 entspricht.

Die Wanddicke 35 des Verbinders 4 beträgt ca. 25% vom Bolzendurchmesser 32, Die Lagehänge 36 entspricht dem ca. 1,3-fachen Bolzendurchmesser 32. Die gleichdicken Stützplatten 37 weisen wegen des notwendigen Kraftschlusses zwischen dem Bolzen 3 und dem Verbinder 4 eine um 30% größere Wanddicke 38 als die Wanddicke 35 auf. Der Kraftschluß wird über die Schraubverbindung 48 in einer Bohrung 39 erzeugt.

Ein Abstand 47 zwischen der Mitte der Öffnung 6 und der Mitte des Verbinders 4 ist sehr klein. Dazwischen liegt nur ein Steg 7. Dieser kleine Abstand 47 führt zu einer relativ niedrigen Beanspruchung des Bolzens 3 im Fahrbetrieb eines Gleiskettenfahrzeuges.

Die Montage einer Verbinderkette mit den vorbeschriebenen Teilen erfolgt dadurch, daß mit Laufpolstern 23 und gummigelagerten Bolzen 3 versehene Rohrkörper 1 über die Verbinder 4 und 5 endlos miteinander verbunden werden. Hierbei klemmen die Verbinder 4 und 5 die Bolzen 3 drehfest. Die notwendigen Klemmkräfte werden über bekannte Schraubverbindungen 48 an den Verbindern 4 und 5 erzeugt.

Nach Fig. 5 weist ein mit Laufpolstern 50 versehener Rohrkörper 51 Öffnungen 6 in dem Rohrköper 51 und zwar innerhalb der Laufpolster 50 auf. Hierzu sind die Laufpolster 50 für die Schmutzabfuhr mit durchgehenden Ausnehmungen 52 versehen.

Stege 7 begrenzen die Öffnungen 6 seitlich und die Rohre 2 in Laufrichtung 53. Ein relativ großer Abstand 54 besteht zwischen den Öffnungen 6 und dem Verbinder 4.

## Patentansprüche

1. Verbindergleiskette für Fahrzeuge mit in Kettenkörpern gummigelagerten Bolzen (3) und außen auf den Bolzen (3) angeordneten, separaten, über eine Schraube (48) spannbaren Verbindern (4, 5) zur Verbindung von Kettenkörpern, wobei die Kettenkörper als Rohrkörper (1) ausgebildet sind und wenigstens zwei Öffnungen (6) für Triebzahnräder (19) aufweisen, die jeweils durch zwei, etwa quer zur Laufrichtung der Verbindergleiskette liegende Rohrabschnitte der Rohre (2) sowie durch seitliche Abschnitte begrenzt sind,
dadurch gekennzeichnet,
daß die Zahnflankenflächen für den Triebzahneingriff (6) im Rohrkörper (1) mit gehärteten Verschleißnocken (10) versehen sind, welche jeweils
durch eine Randschicht-Härtezone (11) im Bereich einer einseitigen Verdickung der Rohrwandung gebildet sind,
wobei die Randschicht-Härtezone (11) auf einer umlaufenden, nicht gehärteten Zone (9) von im Vergleich zur Dicke der Randschicht-Härtezone (11) wesentlich geringerer Restwanddicke der Rohre (2) sitzt, und daß die seitlichen Begrenzungsabschnitte für die Öffnungen (6) von Stegen (7) gebildet sind.

2. Verbindergleiskette nach Anspruch 1,
dadurch gekennzeichnet,
daß die Hauptachsen (14) der Verschleißnokken (10) des Rohrkörpers (19) eine V-Form bilden.

3. Verbindergleiskette nach Anspruch 1,
dadurch gekennzeichnet,
daß die Verschleißnocken (10) etwa nierenförmig ausgebildet sind und mit ihren breitesten Abschnitten (12) etwa am engsten Querschnitt (13) des Triebzahneingriffes (6) im Rohrkörper (1) liegen, während ihre schmalsten Abschnitte (140) etwa rechtwinklig dazu liegen.

4. Verbindergleiskette nach Anspruch 1,
dadurch gekennzeichnet,
daß die Verschleißnocken (10) einen mittleren Radius (16) aufweisen, der etwa dem Innendurchmesser (17) des Rohres (2) entspricht.

5. Verbindergleiskette nach Anspruch 1,
dadurch gekennzeichnet,
daß die Länge (31) der aus dem Rohrkörper (1) seitlich herausragenden Bolzenabschnitte (30) etwa ihrem 1,4fachen Durchmesser (32) entspricht.

6. Verbindergleiskette nach Anspruch 5,
dadurch gekennzeichnet,
daß die auf dem Bolzenabschnitt (30) befestigbaren Verbinder (4) im Umschlingungsbereich eine sehr geringe Wanddicke (35) aufweisen und zwar im Verhältnis zum Durchmesser (32) des Bolzens (3) etwa wie 1 : 4 und daher in der Art einer Bandschelle ausgebildet sind und die Lagerlänge (36) des Verbinders (4) auf dem Bolzen (3) etwa seinem 1,3fachen Durchmesser (32) entspricht und die Stützplatten (37) um ca. 30 % dicker sind als die Wanddikke (35) und etwa gleich dick ausgebildet sind.

7. Verbindergleiskette nach Anspruch 1,
dadurch gekennzeichnet,
daß der Rohrkörper (1) fahrbahnseitig Greiferleisten (20) und laufrollenseitig Bodenplatten (25) aufweist.

8. Verbindergleiskette nach Anspruch 1,
dadurch gekennzeichnet,
daß der Rohrkörper (1) zwischen den Öffnungen (6) für einschiebbare Laufpolster (23) mit Führungsnuten (21) ausgebildete Greiferleisten (20) und Anschlagleisten (22) aufweist.

9. Verbindergleiskette nach den Ansprüchen 1 und 6,
dadurch gekennzeichnet,
daß der Rohrkörper (1) einteilig mit einem durch Anschlag- und Greiferleisten (20, 22) verstärkten H-förmigen Mittelteil (46) ausgebildet ist und am Mittelteil (46) zwischen den Anschlagleisten (22), im Bereich der Bolzen (3) zwei Ausnehmungen (45) für Mittenverbinder (5) aufweist.

10. Verbindergleiskette nach den Ansprüchen 1 und 8 für Fahrzeuge mit zwei engbenachbarten Triebzahnrädern,
dadurch gekennzeichnet,
daß die Öffnungen (6) im Bereich der Anschlagleisten (22) eines damit versehenen Rohrkörpers (51) angeordnet sind.

11. Verbindergleiskette nach Anspruch 10 mit Laufpolstern,
dadurch gekennzeichnet,
daß entsprechend den Öffnungen (6) in den Laufpolstern (50) durchgehende Ausnehmungen (52) vorgesehen sind.

## Claims

1. Connector caterpillar track for vehicles having pins (3) rubber-mounted in track bodies and separate connectors (4,5), arranged on the outside on the pins (3) and clampable by way of a screw (48), for the connection of track bodies, the track bodies being designed as tube bodies (1) and having at least two apertures (6) for driving toothed wheels (19) which are in each case bounded by two tube portions, lying approximately transversely to the direction of travel of the connector caterpillar track, of the tubes (2), as well as by lateral portions, characterized in that the tooth flank surfaces for the driving-tooth engagement (6) in the tube body (1) are provided with hardened wear cams (10), each of which is formed by an edge-layer hardness zone (11) in the region of a unilateral thickening of the tube wall, the edge-layer hardness zone (11) being seated on an encircling non-hardened zone (9) of the tubes (2) which has significantly less residual wall thickness when compared with the thickness of the edge-layer hardness zone (11) and that the lateral bounding portions for the apertures (6) are formed of webs (7).

2. Connector caterpillar track according to Claim 1,
characterized in that the main axes (14) of the wear cams (10) of the tube body (19) form a V-shape.

3. Connector caterpillar track according to Claim 1,
characterized in that the wear cams (10) are designed so as to be roughly kidney-shaped and lie with their widest portions (12) approximately at the narrowest cross-section (13) of the driving-tooth engagement (6) in the tube body (1), whilst their narrowest portions (140) lie approximately at right angles thereto.

4. Connector caterpillar track according to Claim 1,
characterized in that the wear cams (10) have a central radius (16) which corresponds approximately with the inside diameter (17) of the tube (2).

5. Connector caterpillar track according to Claim 1,
characterized in that the length (31) of the pin portions (30) protruding laterally from the tube body (1) corresponds approximately to 1.4 times their diameter (32).

6. Connector caterpillar track according to Claim 5,
characterized in that the connectors (4), fastenable on the pin portion (30), have in the looping-around region a very slight wall thickness (35), namely in a ratio to the diameter (32) of the pin (3) of approximately 1 : 4 and are therefore designed in the manner of a band strap and the bearing length (36) of the connector (4) on the pin (3) corresponds approximately to 1.3 times its diameter (32) and the supporting plates (37) are about 30% thicker than the wall thickness (35) and are designed with approximately the same thickness.

7. Connector caterpillar track according to Claim 1,
characterized in that the tube body (1) has, on the roadway side, gripper strips (20) and, on the tread roller side, base plates (25).

8. Connector caterpillar track according to Claim 1,
characterized in that the tube body (1) has, between the apertures (6), gripper strips (20), designed with guide grooves (21), and stop strips (22) for insertable running pads (23).

9. Connector caterpillar track according to Claims 1 and 6,
characterized in that the tube body (1) is designed in one piece with an H-shaped middle part (46) strengthened by stop and gripper strips (20,22) and has on the middle part (46) between the stop strips (22), in the region of the pins (3), two recesses (45) for centre connectors (5).

10. Connector caterpillar track according to Claims 1 and 8 for vehicles having two closely adjacent driving toothed wheels, characterized in that the apertures (6) are arranged in the region of the stop strips (22) of a tube body (51) provided therewith.

11. Connector caterpillar track according to Claim 10 having running pads, characterized in that corresponding to the apertures (6) throughpas- sing recesses (52) are provided in the running pads (50).

## Revendications

1. Chenille à éléments de liaison pour véhicules comportant, des tourillons (3) à palier en caoutchouc dans des corps de chaîne et des éléments de liaison séparés (4, 5), disposés à l'extérieur sur les tourillons (3), pouvant être serrés par une vis (48) pour l'assemblage de corps de chaînes, ces derniers étant sous forme de tubes (1), et au moins deux ouvertures (6) pour des barbotins d'entraînement (19) qui sont limités chacun par deux sections tubulaires du tube (2) se trouvant a peu prés perpen- dicularies à 1 a direction de la marche de la chenille à éléments de liaison ainsi que par des sections latérales
caractérisée en ce que
les surfaces des flanc des dent sont munies de bossages d'usure (10) durcis pour l'engrènement de la dent d'entraînement (6) dans le corps tubulaire (1), formés chaque fois par une zone durcie de couche superficielle (11) dans le secteur d'un épaississement de la paroi tubulaire,
la zone durcie de la couche superficielle (11) se situant sur une zone périphérique non durcie (9) où l'épaisseur de paroi restante du tube (2) est considérablement plus faible que l'épaisseur de la zone durcie de la couche superficielle (11), et que
les sections latérales de limitation pour les ouvertures (6) sont constituées par des entretoises (7).

2. Chenille à éléments de liaison selon la revendication 1, caractérisée en ce que les axes principaux (14) des bossages d'usure (10) du corps tubulaire (1) forme un V.

3. Chenille à éléments de liaison selon la revendication 1, caractérisée en ce que les bossages d'usure (10) sont approximativement sous forme de rognon, et se situent par leurs sections les plus larges (12) à peu prés sur la section la plus étroite (13) de l'engrènement de la dent d'entraînement (6) dans le corps tubulaire (1), tandis que leurs sections les plus étroites (140) se trouve à peu prés perpendi- culairess à celles-là.

4. Chenille à éléments de liaison selon la revendication 1, caractérisée en ce que les bossages d'usure (10) présentent un rayon moyen (16) qui correspond approximativement au diamètre intérieur (17) du tube (2).

5. Chenille à éléments de liaison selon la revendication 1, caractérisée en ce que la longueur (31) des sections de tourillons (30) dépassant latéralement du corps tubulaire (1) correspond approximativement à 1,4 fois son diamètre (32).

6. Chenille à éléments de liaison selon la revendication 5, caractérisée en ce que les éléments de liaison (4) pouvant se fixer sur la section de tourillon (30) comportent dans leur zone de prise, une très faible épaisseur de paroi (35), à savoir à peu près dans un rapport de 1 : 4 avec le diamètre (32) du tourillon (3), et de ce fait sont formés comme des colliers et la longueur de tourillonnement (36) de l'élément de liaison (4) sur le tourillon (3) correspond approximativement à 1,3 fois son diamètre (32), et que les plaques d'appui (37) sont environ 30% plus épaisses que l'épaisseur de paroi (35) et sont à peu prés de même épaisseur.

7. Chenille à éléments de liaison selon la revendication 1, caractérisée en ce que le corps tubulaire (1) comporte du côté chaussée, des crampons (20) et du côté des galets de roulement, des plaques de base (25).

8. Chenille à éléments de liaison selon la revendication 1, caractérisée en ce que le corps tubulaire (1) comporte des crampons (20), formés entre les ouvertures (6) pour les patins insérables (23), avec des gorges de guidage (21) et des nervures de butée (22).

9. Chenille à éléments de liaison selon les revendications 1 et 6, caractérisée en ce que le corps tubulaire (1) est formé de façon monobloc d'une partie médiane (46) en forme de H renforcée par les crampons et les nervures de butée (20, 22) et présente sur cette partie médiane (46) deux évidements (45) pour l'élément de liaison médian (5), entre les nervures de butée (22), dans la zone du boulon (3) .

10. Chenille à éléments de liaison selon les revendications 1 et 8, pour véhicules comportant deux barbotins d'entraînement très voisins, caractérisée en ce que les ouvertures (6) sont placées dans la zone des nervures de butée (22) d'un corps tubulaire (1) qui en est muni.

11. Chenille à éléments de liaison comportant des patins selon la revendication 10, caractérisée en ce que sont prévues des évidements (52) correspondant aux ouvertures (6) traversant les patins (50).
